# EUROPEAN PATENT APPLICATION

(11) **EP 3 591 618 A2**
(43) Date of publication of application: **08.01.2020**
(21) Application number: 19184243.4
(22) Date of filing: 03.07.2019
(51) Int. Cl.: G06T 13/40, G06T 17/20

(54) **METHOD AND APPARATUS FOR CONVERTING 3D SCANNED OBJECTS TO AVATARS**

(30) Priority: 04.07.2018 HK 18108654
(71) Applicant: Kwai, Bun, Hong Kong (HK)
(72) Inventor: Kwai, Bun, Hong Kong (HK)
(74) Representative: Iqbal, Md Mash-Hud

(57) **Abstract**

A method of converting a three-dimensional (3D) scanned object to an avatar. The method contains the steps of conducting a 3D segmentation of the 3D scanned object to obtain segmented results; and adapting a first template to the segmented results to create an avatar. The first template includes a topology, and the adapting step contains the step of mapping the topology of the first template to the segmented results to create the avatar. The invention provides an automated process which requires virtually no human intervention to convert the 3D scanned object to the avatar.

## Description

### FIELD OF INVENTION

This invention relates to computer-implemented physical data manipulation, and in particular a mechanism to process and convert three-dimensional (3D) scanned data of a physical object.

### BACKGROUND OF INVENTION

3D body scanning is the action of capturing in 3D the human body using a 3D body scanner. 3D body scanners can capture a human body, or only specific parts, to generate a very detailed 3D model. The result is a 3D model viewable on a computer, of the body or limb which was captured. Depending on the desired application and on the 3D body scanner used, the 3D model can have colors and textures to perfectly match the original, or simply be a mesh, a sort of cloud of dots forming the shape of the body.

However, the raw scanned 3D data of human body without further manual work, can only be used directly for 3D printing. In comparison, avatars (digital characters) is a complete revamp of data structure from 3D scanned data (which may include at least one of retopology, texture transfer, and rigging), in order to be used in digital applications, e.g., animation, digital cloth fitting, etc. Compared to raw scanned 3D data, an avatar has very much similar geometric and texture appearance but completely different data structure to provide one or more of the following properties (not exclusive): clean anatomical model topology; UV mapping (i.e. the 3D modeling process of projecting a 2D image to a 3D model's surface for texture mapping); skin texture including body, face, fingers metrics; skeletal and skin metrics; small file high quality (e.g. 20mb) by baking geometric details into parametric space in the form of normal maps / height maps; etc.

Conventional techniques for conversion from 3D scanned data to avatars require extensive manual expertise (e.g. weeks of work by a team) to create even a single avatar and automation of the process has not been heretobefore possible. Without automation, the high cost and time of the above manual expertise means avatar applications are limited to only specific scopes e.g. digital doubles of celebrities in films and TV.

### SUMMARY OF INVENTION

In the light of the foregoing background, it is an object of the present invention to provide an alternate approach of converting 3D scanned data to avatars which eliminates or at least alleviates the above technical problems.

The above object is met by the combination of features of the main claim; the subclaims disclose further advantageous embodiments of the invention.

One skilled in the art will derive from the following description other objects of the invention. Therefore, the foregoing statements of object are not exhaustive and serve merely to illustrate some of the many objects of the present invention.

Accordingly, the present invention, in one aspect, is a method of converting a three-dimensional (3D) scanned object to an avatar. The method contains the steps of conducting a 3D segmentation of the 3D scanned object to obtain segmented results; and adapting a first template to the segmented results object to create an avatar. The first template includes a topology, and the adapting step contains the step of mapping the topology of the first template to the segmented results to create the avatar.

In one embodiment the topology of the first template contains information that includes a skeleton, and skeleton joints.

In another embodiment, the 3D scanned object contains a pose, and after the mapping step the first template substantially matches the pose.

In a further embodiment, the 3D scanned object includes a shape, and after the mapping step the first template substantially matches the shape.

In a further embodiment, the avatar further contains vertices and wherein the method further includes the step of constraining the vertices to a surface space of the 3D scanned object within close proximity.

In a further embodiment, the first template is an arbitrary humanoid-shaped mesh, and it contains a topology for an animated humanoid character.

In a further embodiment, the 3D segmentation is at least partially conducted based on anatomical facts.

In a further embodiment, the 3D segmentation step is conducted based upon a plurality of two-dimensional (2D) slices of the 3D scanned object.

In a further embodiment, the 3D segmentation step is at least partially conducted based upon an artist-defined result.

In a further embodiment, the method further contains the step of adapting a second template to the avatar; the second template including a skeleton-rigged body mesh. The step of adapting the second template includes the step of altering a skeleton weight and/or a skin weight of the avatar based on the second template and the shape of the avatar.

In a further embodiment, the second template contains an identical topology as the avatar, or a similar UV as the avatar.

In a further embodiment, the method further contains a third template fitted to the avatar, and a further step of fitting an accessory object to the avatar as a result of a third template.

In a further embodiment, the accessory object does not penetrate the third template.

In a further embodiment, the third template contains a topology identical to that of the avatar, or a similar UV as the avatar.

In a further embodiment, the third template and the first template contain identical topology.

In a further embodiment, the fitting step contains the step of physically simulating the accessory object against the avatar.

In a further embodiment, the fitting step further contains the step of simulating the accessory object against the avatar in the form of a passive collider.

In a further embodiment, the step of physically simulating the accessory object further includes the step of morphing the third template into the avatar over a plurality of frames.

In a further embodiment, the 3D scanned object is an arbitrary humanoid-shaped mesh.

In a further embodiment, the arbitrary humanoid-shaped mesh is a parametric body mesh generated by inputted dimensional parameter including one or more of the followings: height, chest circumference, waist circumference, hip circumference.

In a further embodiment, the arbitrary humanoid-shaped mesh is a parametric body mesh generated by inputted dimensional parameter including one or more of the followings: height, chest circumference, waist circumference, hip circumference.

In a further embodiment, the 3D scanned object contains an arbitrary face-shaped mesh.

In a further embodiment, the 3D segmentation contains a face landmark detection.

In a further embodiment, the avatar is a mesh with a shape of the 3D scanned object and the topology of the first template.

According to a second aspect of the invention, there is disclosed a method of automatically fitting an accessory object to an avatar. The method contains the steps of providing an avatar, providing an accessory object, providing a template which the accessory object does not penetrate, and fitting the accessory object to the avatar as a result of the template fitted to the avatar.

In one embodiment, the template has the same topology as the avatar.

In another embodiment, the avatar is created using the method as mentioned above in the first aspect of the invention.

In a further embodiment, the fitting step contains the step of physically simulating the accessory object against the avatar.

In a further embodiment, the fitting step further contains the step of simulating the accessory object against the avatar in the form of a passive collider.

In a further embodiment, the step of physically simulating the accessory object further includes the step of morphing the third template into the avatar over a plurality of frames.

In a further embodiment, there is disclosed a method of automatically rigging an avatar that contains the step of adapting a template including a skeleton-rigged body mesh to the avatar; and the step of altering a skeleton and skin weights of the avatar based on the template and the shape of the avatar.

In a further embodiment, the template contains an identical topology as the avatar, or a similar UV as the avatar.

In a further embodiment, there is disclosed a non-transitory computer-readable medium storing computer-executable programs that, when executed by a processor, cause an information processing apparatus to perform: conducting a 3D segmentation of the 3D scanned object to obtain segmented results; and adapting a first template to the segmented results to create an avatar. The first template includes a topology, and the adapting step contains the step of mapping the topology of the first template to the segmented results to create the avatar.

In a further embodiment, the topology of the first template contains information that includes a skeleton, and skeleton joints.

In a further embodiment, the 3D scanned object contains a pose, and wherein after the mapping step the first template substantially matches the pose.

In a further embodiment, the 3D scanned object includes a shape, and wherein after the mapping the first template substantially matches the shape.

In a further embodiment, the avatar further contains vertices and wherein the computer-executable programs, when executed by a processor, further cause the information processing apparatus to perform constraining the vertices to a surface space of the 3D scanned object within close proximity.

In a further embodiment, the first template is an arbitrary humanoid-shaped mesh, and it contains a topology for an animated humanoid character.

In a further embodiment, the 3D segmentation is at least partially conducted based on anatomical facts.

In a further embodiment, the 3D segmentation is conducted based upon a plurality of two-dimensional (2D) slices of the 3D scanned object.

In a further embodiment, the 3D segmentation is at least partially conducted based upon an artist-defined result.

In a further embodiment, the computer-executable programs, when executed by a processor, further cause the information processing apparatus to perform adapting a second template to the avatar; the second template including a skeleton-rigged body mesh. Adapting the second template includes altering a skeleton and skin weights of the avatar based on the second template and the shape of the avatar.

In a further embodiment, the second template contains an identical topology as the avatar, or a similar UV as the avatar.

In a further embodiment, the computer-executable programs, when executed by a processor, further cause the information processing apparatus to perform fitting an accessory object to the avatar as a result of a third template fitted to the avatar.

In a further embodiment, the accessory object does not penetrate the third template.

In a further embodiment, the third template contains a topology identical to that of the avatar, or a similar UV as the avatar.

In a further embodiment, the third template and the first template contain identical topology, or contain similar UV.

In a further embodiment, the computer-executable programs, when executed by a processor, further cause the information processing apparatus to perform physically simulating the accessory object against the avatar.

In a further embodiment, the computer-executable programs, when executed by a processor, further cause the information processing apparatus to perform simulating the accessory object against the avatar in the form of a passive collider.

In a further embodiment, the computer-executable programs, when executed by a processor, further cause the information processing apparatus to perform morphing the third template into the avatar over a plurality of frames.

In a further embodiment, the 3D scanned object is an arbitrary humanoid-shaped mesh.

In a further embodiment, the 3D scanned object contains an arbitrary face-shaped mesh.

In a further embodiment, the 3D segmentation contains a face landmark detection.

In a further embodiment, the avatar is a mesh with a shape of the 3D scanned object and the topology of the first template.

According to a fifth aspect of the invention, there is disclosed a non-transitory computer-readable medium storing computer-executable programs that, when executed by a processor, cause an information processing apparatus to perform: providing an avatar, providing an accessory object, providing a template which the accessory object does not penetrate, and fitting the accessory object to the avatar as a result of the template fitted to the avatar.

In one embodiment, the template has the same topology as the avatar.

In another embodiment, the avatar is created by computer-readable medium storing computer-executable programs that, when executed by a processor, cause an information processing apparatus to perform steps as mentioned above in the fifth aspect of the invention.

In a further embodiment, the computer-executable programs, when executed by a processor, further cause the information processing apparatus to perform physically simulating the accessory object against the avatar.

In a further embodiment, the computer-executable programs, when executed by a processor, further cause the information processing apparatus to perform morphing the third template into the avatar over a plurality of frames.

According to a sixth aspect of the invention, there is disclosed a non-transitory computer-readable medium storing computer-executable programs that, when executed by a processor, cause an information processing apparatus to perform adapting a template including a skeleton-rigged body mesh to the avatar; and altering a skeleton and skin weights of the avatar based on the template and the shape of the avatar.

In one embodiment, the template contains an identical topology as the avatar, or a similar UV as the avatar.

According to a seventh aspect of the invention, there is disclosed an information handling apparatus comprising a processor; wherein the processor is operable to implement a method comprising the steps of: conducting a 3D segmentation of the 3D scanned object to obtain segmented results; and adapting a first template to the segmented results to create an avatar. The first template includes a topology, and the adapting step contains the step of mapping the topology of the first template to the segmented results to create the avatar.

In one embodiment, the topology of the first template contains information that includes a skeleton, and skeleton joints.

In another embodiment, the 3D scanned object contains a pose, and wherein after the mapping step the first template substantially matches the pose.

In a further embodiment, the 3D scanned object includes a shape, and wherein after the mapping the first template substantially matches the shape.

In a further embodiment, the avatar further contains vertices and wherein the method further comprises the step of constraining the vertices to a surface space of the 3D scanned object within close proximity.

In a further embodiment, the first template is an arbitrary humanoid-shaped mesh, and it contains a topology for an animated humanoid character.

In a further embodiment, the 3D segmentation is at least partially conducted based on anatomical facts.

In a further embodiment, the 3D segmentation is conducted based upon a plurality of two-dimensional (2D) slices of the 3D scanned object.

In a further embodiment, the 3D segmentation is at least partially conducted based upon an artist-defined result.

In a further embodiment, the method further comprises the steps of adapting a second template to the avatar; the second template including a skeleton-rigged body mesh. Adapting the second template includes altering a skeleton and skin weights of the avatar based on the second template and the shape of the avatar.

In a further embodiment, the second template contains an identical topology as the avatar, or a similar UV as the avatar.

In one specific implementation, the method further comprises the steps of fitting an accessory object to the avatar as a result of a third template fitted to the avatar.

In a further embodiment, the accessory object does not penetrate the third template.

In a further embodiment, the third template contains a topology identical to that of the avatar, or a similar UV as the avatar.

In a further embodiment, the third template and the first template contain identical topology, or contain similar UV.

In a further embodiment, the fitting step contains the step of physically simulating the accessory object against the avatar.

In a further embodiment, the method further contains the step of simulating the accessory object against the avatar in the form of a passive collider.

In a further embodiment, the method further includes the step of morphing the third template into the avatar over a plurality of frames.

In a further embodiment, the 3D scanned object is an arbitrary humanoid-shaped mesh.

In a further embodiment, the arbitrary humanoid-shaped mesh is a parametric body mesh generated by inputted dimensional parameter including one or more of the followings: height, chest circumference, waist circumference, hip circumference.

In a further embodiment, the 3D scanned object contains an arbitrary face-shaped mesh.

In a further embodiment, the 3D segmentation contains a face landmark detection.

In a further embodiment, the avatar is a mesh with a shape of the 3D scanned object and the topology of the first template.

According to an eighth aspect of the invention, there is disclosed an information handling apparatus comprising a processor; wherein the processor is operable to implement a method comprising the steps of: providing an avatar, providing an accessory object, providing a template which the accessory object does not penetrate, and fitting the accessory object to the avatar as a result of the template fitted to the avatar.

In one embodiment, the template has the same topology as the avatar.

In another embodiment, the avatar is created using the information handling apparatus as described above in the seventh aspect of the invention.

In a further embodiment, the fitting contains physically simulating the accessory object against the avatar.

In a further embodiment, the fitting contains morphing the third template into the avatar over a plurality of frames.

According to a ninth aspect of the invention, there is disclosed an information handling apparatus comprising a processor; wherein the processor is operable to implement a method comprising the steps of: adapting a template including a skeleton-rigged body mesh to the avatar; and altering a skeleton and skin weights of the avatar based on the template and the shape of the avatar.

In one embodiment, the template contains an identical topology as the avatar, or a similar UV as the avatar.

The invention as illustrated in the embodiments provides automated workflows of creating an avatar, skeleton-rigging an avatar, and/or applying an accessory object (e.g. a garment) to an avatar. In comparison to prior computer systems or software to achieve similar results, the invention only requires minimal level of human intervention. To achieve the segmentation, the algorithm involved in the process is a complex logical flow making use of artist judgement and anatomical facts, while prior art systems are usually based on pure math algorithms (e.g. branch detection). The algorithm provided by the invention is more accurate in terms of human-specific segmentation.

In addition, the algorithm used in the invention is also much faster as compared to prior art algorithm, resulting in a practical system that can perform hundreds of automatic avatar conversion a day by one computer. The only manual effort is the user who press a button to trigger the process.

Furthermore, the use of various templates in the processes of creating an avatar, skeleton-rigging an avatar, and/or applying an accessory object (e.g. a garment) to an avatar enables the input of any arbitrary shaped form of human body. This means that there is no prerequisite to height, width, or fitness, etc. of the 3D human body data as scanned. The template will be adapted to any inputted human body data and the topology in the template can be transferred to the human body data.

The approaches provided by the present invention enable the possibility of mass-scale adoption of 3D avatars to be used in variety of digital applications. The literal increase in speed of 3D avatar production is more than 10,000 times as compared to prior art. Since the present invention also allows parallel processing, it could potentially convert a population scale of 3D scanned results to avatars.

### BRIEF DESCRIPTION OF FIGURES

The foregoing and further features of the present invention will be apparent from the following description of preferred embodiments which are provided by way of example only in connection with the accompanying figures, of which:
Fig. 1 is an illustration showing how an arbitrary humanoid-shaped mesh is converted to an avatar according to a first embodiment of the present invention.
Fig. 2 is a flowchart showing steps of the conversion as shown in Fig. 1.
Fig. 3 is a flowchart showing detailed steps of 3D segmentation in Fig. 2.
Fig. 4 is a flowchart showing detailed steps of applying the first template in Fig. 2.
Fig. 5 is an illustration how an arbitrary humanoid-shaped mesh is converted to an avatar and then rigged, according to another embodiment of the present invention.
Fig. 6 is an illustration how a garment accessory object is fitted on to an avatar showing according to another embodiment of the present invention.

In the drawings, like numerals indicate like parts throughout the several embodiments described herein.

### DETAILED DESCRIPTION OF THE PREFERRED EMBODIMENTS

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

The present invention may be a system, a method, and/or a computer program product. The computer program product may include a computer readable storage medium (or media) having computer readable program instructions thereon for causing a processor to carry out aspects of the present invention.

Topology in 3D models is defined as the wireframe of a given object (e.g. a human body). The wireframe is comprised of all the vertices (where lines meet to form a point), edges (the lines made up of two connected vertices) and from that information the faces can be generated (generally have 2-3 connected edges per face).

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a dynamic random access memory (DRAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative embodiments the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

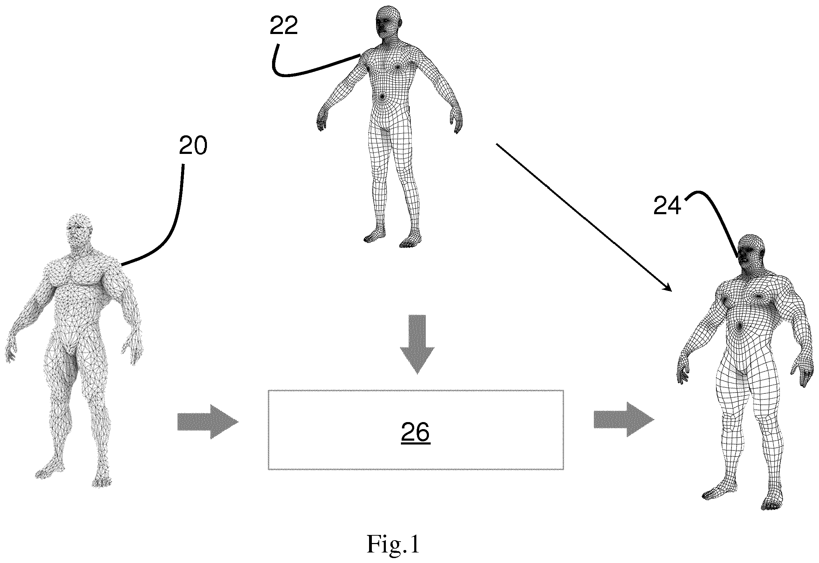

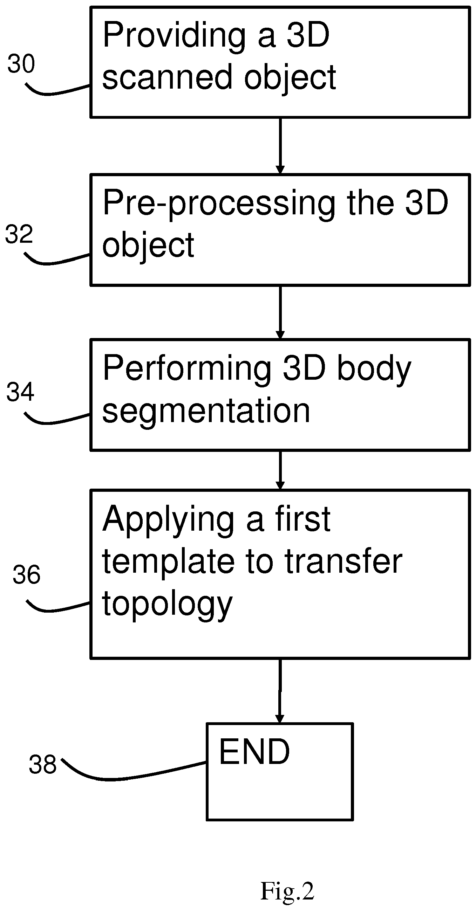

Referring now to Figs. 1-4, the first embodiment of the present invention is method of converting a 3D scanned object 20 of a human body to an avatar. The method is generally represented by a function block 26 in Fig. 1, and is shown as various steps in Fig. 2. As shown in Step 30 in Fig. 2, the 3D scanned object 20 is obtained from a 3D scanner which is well-known in the art, and the resultant data is a humanoid-shaped 3D mesh with arbitrary vertexes, edges, face structures, and arbitrary vertex orientations. In other words, the 3D scanned object 20 is a data object which represents in general the shape of a human being, but there is no limitation to the height, body proportion, fitness, muscles, etc. of the human being. The 3D scanned object 20 could even have a garment, an accessory, or other non-human component thereon, or the 3D scanned object 20 can be naked without having any non-human components. It should be noted that the 3D scanned object 20 as a raw data is only suitable for direct replication such as 3D printing or static displaying on a display device. However, it is not possible to manipulate the 3D scanned object 20 for example to change its pose or to produce an animation of the human body with its limbs moving, etc. Rather, the 3D scanned object 20 will have to be converted into an avatar in order for it to be processed further. However, the avatar will have a similar skin appearance as the 3D scanned object **20.** This will be described in more details later. Specific 3D scanning technologies useful herein include, for example, photographic scanning, laser scanning, and a combination thereof; or photographic scanning; or laser scanning.

Next, in Step **32** the 3D scanned object **20** is pre-processed before conducting a 3D segmentation of the 3D scanned object **20.** The purpose of pre-processing is mainly to reduce the number of vertexes in the mesh of the 3D scanned object **20,** making them less dense, so that it is faster and more efficient to conduct any subsequent process, such as 3D segmentation and fitting a template to the 3D scanned object **20.** The pre-processing uses data manipulation techniques such as combining adjacent vertexes, taking averages, etc. In one example the number of vertexes in the 3D scanned object **20** after the pre-processing is around 8,000. Note that certainly, with the pre-processing conducted, there will be a loss in the quality / details of the 3D scanned object **20,** but this can be compensated using a placement map and/or a normal map which are known to skilled persons in the art. 2. The pre-processing also involves an auto-orientation of the arbitrarily-oriented human mesh which is the 3D scanned object **20.** By analyzing the minimal bounding box and convex hull of the mesh, one is able to calculate the rotation matrix to orient the mesh to predefined axis. e.g. +Z facing, +Y up.

Next, in Step **34,** the 3D scanned object **20** undergoes a segmentation in a 3D manner, which means that different parts of the human body (e.g. body landmarks pieces including legs, chest, shoulders, neck, thumbs, 2nd joint of index finger, etc.) are identified in the 3D scanned object **20,** and then segmented results are obtained. Here 3D segmentation means that each part of the human body is analyzed in a 3D dimensional space and identified as a 3D part of the human body. In an embodiment herein, the 3D segmentation is performed in a specific sequence along the human body. For example, the 3D segmentation can be started at the feet and then goes up all the way to the head of the human body.

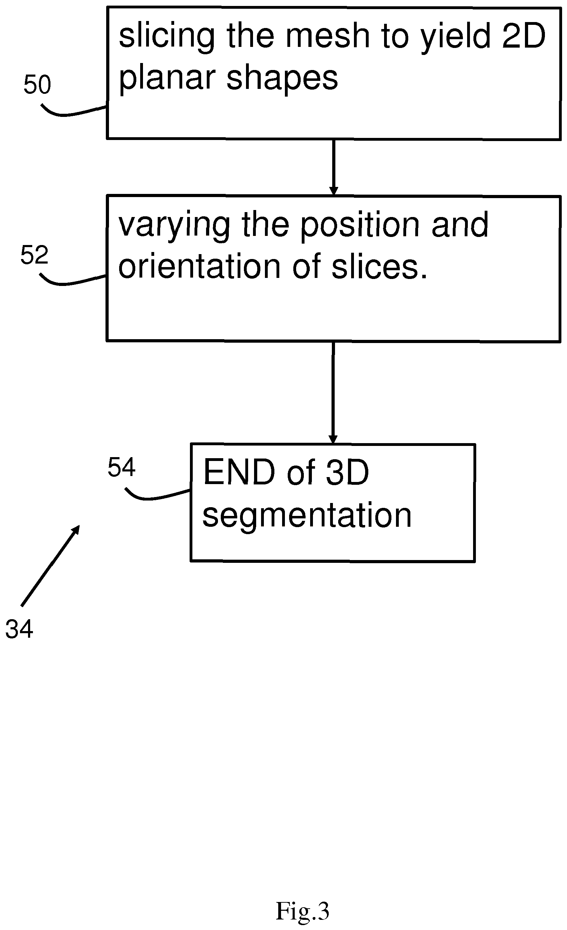

The 3D segmentation may use an algorithm which contains complex logic and involves both artist's judgement and anatomical facts. In particular, as shown in Fig. 3, the first step **50** of 3D segmentation is to use a plurality of 2D slices to slice different parts of the 3D scanned object **20** to yield lots of cross sections of the input mesh. Then, in Step **52** the slices are varied with regards to their positions and orientations based on a web of logical flowchart decisions and each slice's resulting dimensions and shape. These logical flowchart decisions are based on anatomical facts and artistic experience in dimensions, ratios, directional vectors, body landmarks shapes, etc. of a human body. In particular, the above-mentioned cross sections are then analyzed by their shapes and transform matrixes, as well as the trends of their shapes and transform matrixes. For each body part a logical decision procedure is applied for the above analysis according to anatomical facts about each particular body part of a human body. For instance, a thumb will be shorter than an index finger, and the thumb resides on the outermost location of a wrist. Another example is that the wrist at a location around a certain ratio at the end point of an arm. A further example is that a convex shape is present at the Z-direction cross section near the chest and the tip point is the armpit. Furthermore, as an example, if a leg is shorter than arm, it means either the arm is the leg, or part of the leg is covered by cloth when scanning. Finally, all the analysis results are combined using logic of each particular body part to yield the final result of body segmentation. Consequently, the 3D segmentation processes ends at Step **54** once the segmented results are obtained.

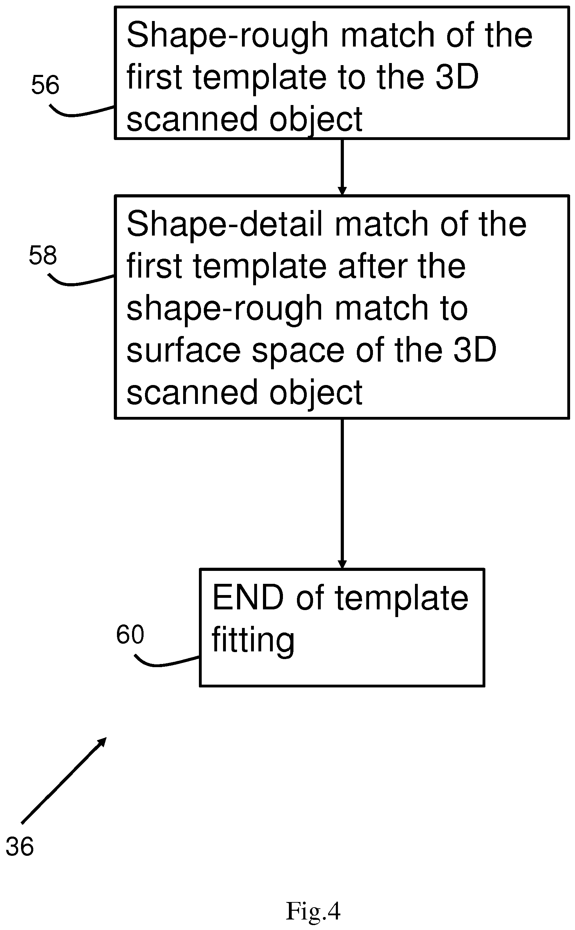

Then, in Step **36** of Fig. 2, a first template **22** (see Fig. 1) is applied to the 3D segmented results such that the first template **22** is fit to the 3D scanned object **20.** The first template **22** is an arbitrary humanoid-shaped mesh that includes a topology, which usually is, but not limited to, an optimized topology for animated humanoid character. In particular, Fig. 4 shows how the first template **22** is fitted to the 3D scanned object **20** through various matching steps. Firstly, in Step **56** a shape-rough match is conducted in which each joint of the first template **22** is matched to that of the segmented results as the latter has been gone through the 3D segmentation and its joints have been identified. The 3D segmentation results are used to reposition and orient the joint position of the first template **22,** hence deforming the first template **22** into a matching pose to the mesh of the 3D scanned object **20.** Optionally, one can also match the perimeter and centroid of cross sections of the segmented results by scaling the joints of the first template **22.** Once the pose and the joints are matched, then the vertices of the first template **22** are of close correspondence at different parts of the human body to that of the mesh of the 3D scanned object **20.** This is the reason why when performing a closest-point-on-mesh or normal-projection from first template **22** to the mesh of the 3D scanned object **20,** the proximity of corresponding vertices is also close enough to avoid incorrect matching. The first template **22** then becomes similar to the 3D scanned object **20** in terms of shape. This is shown in Fig. 1 where the avatar **24** has a topology similar to that of the first template **22** but the avatar has a similar dimension as, and roughly matches the pose and shape of the 3D scanned object **20.**

Then, in Step **58** the first template **22** as it has gone through the shape-rough match is again matched to search results in a shape-detail match. This shape-detail match includes applying a final relaxation to the deformed first template **22,** and yet constraining the relaxation of vertices within the surface space of the mesh of the 3D scanned object 20 to ensure that the shape of the first template **22** does not change after relaxation. In particular, vertices of the first template **22** are constrained to the surface space of the arbitrary human mesh within a close proximity to yield the final result. Finally, the template fitting processes ends at Step **60.** The whole process as shown in Fig. 2 then ends at Step **38.** The final result is an avatar **24** which has a very close if not identical appearance as the 3D scanned object **20** including pose and shape, etc., but inside the avatar **24** is completely different to the 3D scanned object **20** since all joints of a skeleton of the avatar **24** have now been defined which allows the avatar **24** to be further processed, for example to make moves of the body appear natural, or in making a continuous animation. The avatar **24** also has the same topology as the first template **22.**

Alternatively, instead of applying the method of Step **56** to Step **58,** one can utilize non-rigid-registration based on the correspondence between 3D segmentation results of the 3D scanned object **20** and first template **22.** This could result in similar outcomes which is the avatar **24** as described above.

It should be noted that the avatar **24** as shown in Fig. 1 does not have any skeleton joints defined in the avatar **24,** so it has not been rigged in terms of 3D animation technology. Additional processes are required to add, for example, a garment to the avatar or to make it rigged, as will be described in details below. However, the avatar **24** is ready for other types of processes such as fitting a garment or other accessories to the avatar 24, as will also be described in details below.

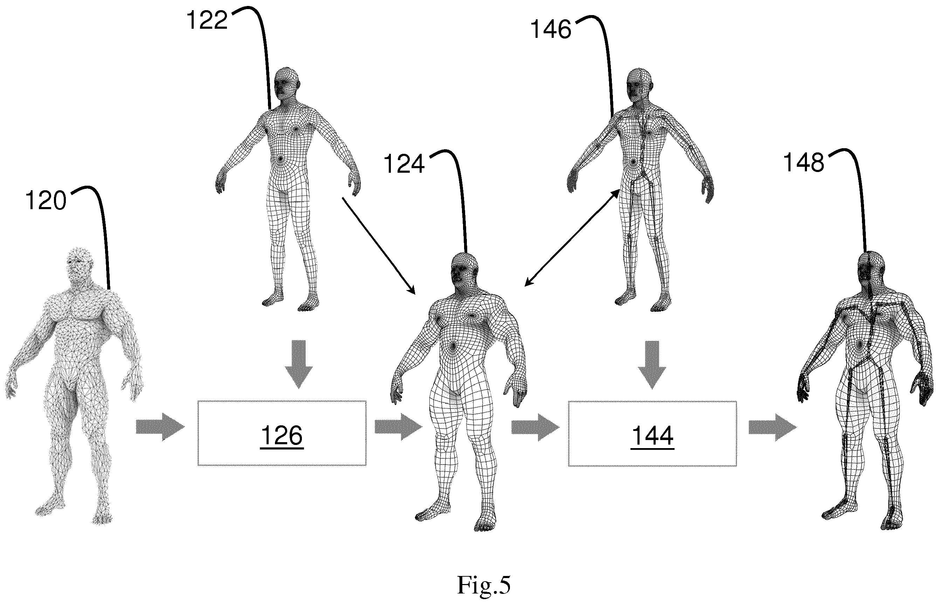

Another embodiment of the preset invention as shown in Fig. 5 is related to a method of converting a 3D scanned object **120** of a human body to a joint-rigged avatar **148.** The method contains essentially two processes, i.e. the conversion from the 3D scanned object **120** to an intermediate avatar **124** which is generally represented by a function block **126** in Fig. 5, and the conversion from the intermediate avatar **124** to the joint-rigged avatar **148** which is generally represented by a function block **144** in Fig. 5. The conversion from the 3D scanned object **120** to an intermediate avatar **124** is similar to the process illustrated in Figs. 1-4, and it also uses a first template **122** for adapting to the 3D scanned object **120,** which will not be described in details here. What is different for the process shown in Fig. 5 as compared to Figs. 1-4 are the additional steps of adapting a second template **146** to the intermediate avatar **124.** The second template **146** contains an artist-predefined, skeleton-rigged body mesh, with an identical topology as the intermediate avatar **124** or a similar UV as the avatar **124.** In adapting the second template **146** to the intermediate avatar **124,** there is a step of transferring the skeleton structure and skin weights from the second template **146** to the intermediate avatar **124.**

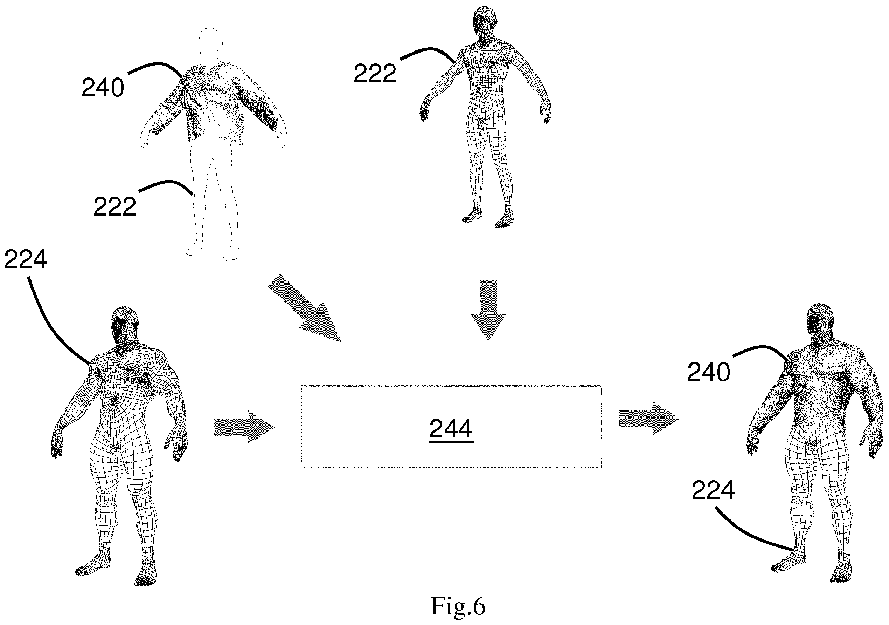

Turning now to Fig. 6, in which a garment **240** as an example of an arbitrary object is applied to an avatar **224.** The method is generally represented by a function block **244** in Fig. 6. The garment **240** has an arbitrary shape, meaning that there is no limitation to dimension, shape, or contour of the garment **240.** However, a requirement is that the garment should not penetrate a third template **222** such that the garment **240** is "wearable" on the surface of third template **222.** Here "not penetrate" means that there is no part of the garment **240** that will intrude into or overlap with any part of the mesh of the third template **222.** The third template **222** is also chosen or made based on the requirement that it has the same topology as the avatar **224.** On the other hand, the avatar **224** could be an arbitrary humanoid-shaped mesh. This means that there is no requirement that the avatar **224** must have a specific shape or pose similar to that of the third template **222.** The avatar **224** can be produced using the process illustrated in Figs. 1-4, or it can be provided *de novo* to the system. In the former case, the third template **222** could be the same or different from the first template used in a process as mentioned in Figs. 1-4 if from which the avatar **224** is resulted, but the third template **222** should have the same topology as the first template. However, in other variations of the embodiment the second template can be different from the first template.

The first step of fitting the garment **240** to the avatar **224** is to physically simulating the garment **240** against the avatar **224.** This includes but not limited to cloth / soft-body type simulation of the avatar **224.** Preferably, the physical simulation is in the form of a passive collider. In a physical simulation in computer graphics, objects are defined to be colliders to interactive with each other, and passive collider are the type of collider that affecting other simulation objects, but itself won't be affected by the simulation. During this process, the third template **222** is morphed into the avatar **224** over a plurality of frames. Here, morphing may include a shape animation from one or more mesh to another one or more mesh, which can involve vertex animation, animation, wrap deformation, other mimic-based deformation, or deformation that utilizes shape or UV transfer. As a result, the garment **240** can be fitted to the avatar **224** as shown in Fig. 6.

For example, although the 3D scanned object described in the embodiments above have a humanoid-shape mesh, those skilled in the art should realize the 3D scanned object is not limited to only representation of human body, but it can also be a representation of animals. In this case the template used for adapting or fitting the needs to be, for example, an animal-shape or other shape.

In addition / alternatively, instead of inputting the 3D object for process from a 3D scanner, the 3D object can also be a parametric body, which is a body mesh generated by inputting dimensional parameter such as height, chest circumference, waist circumference, hip circumference, etc., and is conducted by PCA algorithm(v, w, x).

In Figs. 1-4 the steps of 3D segmentation and adapting the first template are described using particular steps of algorithms. Also, in Fig. 5 the rigging using the second template is described using particular steps of an algorithm. However, those skilled in the art should understand that the same results may be achieved using different algorithms, including other public or proprietary algorithms.

For example, in one alternative algorithm for conducting 3D body segmentation, a plurality of points are distributed over different body parts of the scanned body, then the same set of points are then distributed to the first template at similar correspondence of body parts. The process involves determination by shape similarity, artificial intelligence (AI), or machine learning algorithms.

In Fig. 6 a garment is used as an example of an arbitrary accessory that can be fitted to an avatar. However, in other variations of the invention other arbitrary accessories can also be applied such as glasses, shoes, belts, rings, weapons, armors, clothing, headwear, etc. Also, there are many possible applications of the arbitrary accessory fitting including but not limited to video games, Virtual Reality (VR), Augmented Reality (AR), Mixed Reality (MR), social media, virtual assistant, online shopping, e-commerce, e-marketing.

The avatar and accessory objects like garments, tools, and game assets, etc. can be posted to social media websites or software apps. The usage behavior of avatar, garment and/or game asset can be used in data analysis. For example, avatar data can be tracked for each person to see trend of the avatar over time. The avatar, garment, and/or accessory assets is the avatar, garment, or accessory assets, is further applicable to research and visualization of fields like medical, military, education, security, marketing, virtual-celebrity, virtual ancestors, etc.

In the embodiment described with reference to Fig. 6 above the garment is described to be not penetrating the third template. However, one skilled in the art should realize that in other variations of the invention, the accessories can actually penetrate the third template. For example, human body organs can be located inside or partially penetrating the third template. Then, when the accessory is fitted to the human body the physical simulation can be used, or any other suitable deformation method can be used. In one example, when the third template morphs into the shape of an input avatar, those body organs also morph into the shape to fit the input avatar. As a more specific example, in a computer game there can be a monster made of tree trunks to appear like a humanoid tree trunk. These tree trunks penetrate in and out of the third template but follow the overall volume roughly. Then when the third template morphs into the input avatar, the tree trunks will adopt the shape of the input avatar. The same can be imagined in a similar way when the whole body part consists of robot mechanical parts. Although its overall external appearance is like the human shape of third template, the resultant morphed object has internal structures that penetrate inside the volume which probably also extend a bit outside of the skin surface sometimes.

It is to be understood that, if any prior art publication is referred to herein, such reference does not constitute an admission that the publication forms a part of the common general knowledge in the art, in Australia or any other country.

The exemplary embodiments of the present invention are thus fully described. Although the description referred to particular embodiments, it will be clear to one skilled in the art that the present invention may be practiced with variation of these specific details. Hence this invention should not be construed as limited to the embodiments set forth herein.

While the invention has been illustrated and described in detail in the drawings and foregoing description, the same is to be considered as illustrative and not restrictive in character, it being understood that only exemplary embodiments have been shown and described and do not limit the scope of the invention in any manner. It can be appreciated that any of the features described herein may be used with any embodiment. The illustrative embodiments are not exclusive of each other or of other embodiments not recited herein. Accordingly, the invention also provides embodiments that comprise combinations of one or more of the illustrative embodiments described above. Modifications and variations of the invention as herein set forth can be made without departing from the spirit and scope thereof, and, therefore, only such limitations should be imposed as are indicated by the appended claims.

## Claims

1. A method of converting a three-dimensional (3D) scanned object to an avatar, comprising the steps of:
a) conducting a 3D segmentation of the 3D scanned object to obtain segmented results; and
b) adapting a first template to the segmented results to create an avatar, the first template comprising a topology,
wherein the adapting step comprises the step of mapping the topology of the first template to the segmented results to create the avatar.

2. The method of claim 1, wherein the topology of the first template comprises information comprising a skeleton and skeleton joints.

3. The method of claim 1, wherein the 3D scanned object comprises a pose, and wherein after the mapping step the first template substantially matches the pose.

4. The method of claim 2, wherein the 3D scanned object comprises a shape, and wherein after the mapping step the first template substantially matches the shape.

5. The method of claim 3 or 4, wherein the avatar further comprises vertices and wherein the method further comprises the step of constraining the vertices to a surface space of the 3D scanned object within close proximity.

6. The method of claim 2, wherein the first template is an arbitrary humanoid-shaped mesh, and wherein the first template comprises a topology for an animated humanoid character.

7. The method of claim 1, wherein the 3D segmentation is at least partially conducted based on anatomical facts; and
preferably, the 3D segmentation step is conducted based upon a plurality of two-dimensional (2D) slices of the 3D scanned object.

8. The method of claim 1, wherein the 3D segmentation step is at least partially conducted based upon an artist-defined result;
OR the avatar is a mesh with a shape of the 3D scanned object and the topology of the first template;
OR the method further comprising a step of adapting a second template to the avatar; the second template comprising a skeleton-rigged body mesh; the step of adapting the second template comprising the step of altering a skeleton weight, a skin weight, or a combination thereof of the avatar based on the second template and the shape of the avatar; and preferably the second template comprises an identical topology as the avatar, or a similar UV as the avatar.

9. The method of claim 1, further comprising a third template fitted to the avatar, and further comprising a step of fitting an accessory object to the avatar as the result of the third template.

10. The method of claim 9, wherein the accessory object does not penetrate the third template;
or the third template comprises a topology identical to that of the avatar, or a similar UV as the avatar;
or the third template and the first template contain identical topology, or contain similar UV.

11. The method of claim 9, wherein the fitting step comprises the step of physically simulating the accessory object against the avatar;
preferably, the accessory object comprises the step of simulating the accessory object against the avatar in the form of a passive collider; and
more preferably, the step of physically simulating the accessory object comprises the step of morphing the third template into the avatar over a plurality of frames.

12. The method of claim 1, wherein the 3D scanned object is an arbitrary humanoid-shaped mesh; and
preferably, the arbitrary humanoid-shaped mesh is a parametric body mesh generated by inputted dimensional parameter comprising one or more of the followings: height, chest circumference, waist circumference, hip circumference.

13. The method of claim 1, wherein the 3D scanned object comprises an arbitrary face-shaped mesh; and
preferably, the 3D segmentation comprises face landmark detection.

14. A non-transitory computer-readable medium storing computer-executable programs that, when executed by a processor, cause an information processing apparatus to perform:
conducting a 3D segmentation of the 3D scanned object to obtain segmented results; and
adapting a first template to the segmented results to create an avatar;
wherein the first template comprising a topology, and the adapting step comprising the step of mapping the topology of the first template to the segmented results to create the avatar.

15. An information handling apparatus comprising a processor; wherein the processor is operable to implement a method comprising the steps of:
conducting a 3D segmentation of the 3D scanned object to obtain segmented results; and
adapting a first template to the segmented results to create an avatar;
wherein the first template comprising a topology, and the adapting step comprising the step of mapping the topology of the first template to the segmented results to create the avatar.
